(19) Europäisches Patentamt
European Patent Office
Office européen des brevets

(11) EP 4 755 661 A1

(12) EUROPEAN PATENT APPLICATION
published in accordance with Art. 153(4) EPC

(43) Date of publication:
10.06.2026 Bulletin 2026/24

(51) International Patent Classification (IPC):
B60C 23/04 (2006.01)

(21) Application number: 24888304.3

(52) Cooperative Patent Classification (CPC):
B60C 23/04

(22) Date of filing: 30.07.2024

(86) International application number:
PCT/JP2024/027214

(87) International publication number:
WO 2025/100002 (15.05.2025 Gazette 2025/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.11.2023 JP 2023189669

(71) Applicant: BRIDGESTONE CORPORATION
Chuo-ku
Tokyo 104-8340 (JP)

(72) Inventor: SATO, Kodai
Tokyo 104-8340 (JP)

(74) Representative: Marks & Clerk LLP
15 Fetter Lane
London EC4A 1BW (GB)

(54) **TIRE MONITORING DEVICE, TIRE MONITORING METHOD, AND TIRE MONITORING PROGRAM**

(57) A tire monitoring device includes: an acquisition section that acquires internal pressure information indicating a transition of an internal pressure of a tire; an estimation section that estimates at least one cause of an internal pressure change based on a change pattern, which is a pattern of internal pressure change indicated by the internal pressure information; and an output section that outputs cause information indicating the estimated cause.

[FIG. 1]

**Description**

Technical Field

The technology of the disclosure relates to a tire monitoring device, a tire monitoring method, and a tire monitoring program.

Related Art

As a technique for monitoring the state of a tire provided at a vehicle, the following techniques are known. For example, Japanese Patent Application Laid-Open (JP-A) No. 2014-076748 describes a tire internal pressure warning system including an information terminal device that determines a failure condition such as a puncture or a natural depressurization based on a change in internal pressure of each tire received from an internal pressure acquisition device, which acquires an internal pressure of each tire of a vehicle, and that displays a warning according to the failure condition.

Summary of the Invention

Problem to be Solved by the Invention

Use at an appropriate internal pressure is required in order to maximize tire performance. On the other hand, it is common that due to a pressure difference between the inside and the outside of a tire, air inside the tire gradually escapes, such that the internal pressure of the tire gradually decreases. A tire pressure monitoring system (TPMS) that issues a warning when an internal pressure of a tire falls below a threshold value, is known. In a case in which a warning has been issued from a TPMS, it is possible to take measures such as refilling a tire with air, for example.

Currently, measures are taken to carry out maintenance on a target tire in a case in which a warning has been issued from a TPMS; however, it is considered that it would be easy to secure resources such as facilities, parts, and personnel if the target tire can be incorporated into a maintenance plan prior to the issuance of the warning. In addition, according to current measures, in a case in which an unexpected situation has occurred, such as a sudden increase in the rate of decrease in internal pressure, an emergency response is necessary, and a significant revision to the original maintenance plan is sometimes necessary. In such a case, it may be difficult to secure resources such as facilities, parts, and personnel.

In existing TPMS, it is not possible to estimate and provide notification of the cause of a decrease in an internal pressure of a tire. Therefore, a case may arise in which only a response of refilling air is taken, with respect to an abnormality that is not resolved simply by refilling air, and the abnormality is noticed during repeated refilling of air in response to warnings that are issued frequently. Until an abnormality is noticed, the tire is used at an internal pressure that is outside of an appropriate range. As a result, tire durability is reduced, and customer value, such as safety and long-term use, is impaired. Furthermore, multiple causes are also conceivable as the cause of the decrease in the internal pressure of the tire. Therefore, multiple inspections need to be performed at a maintenance site in order to investigate the cause, and work at the site becomes complicated.

In addition, the time required for maintenance work varies greatly for each cause of a decrease in internal pressure, such that it is difficult to predict the work time for maintenance in situations in which the cause is unknown. In a case in which the working time is longer than planned, revisions to the original maintenance plan are necessary. On the other hand, in a case in which the working time becomes shorter than planned, a loss such as availability of personnel occurs.

In addition, some parts that require replacement in maintenance work are expensive to obtain and take time to obtain, and in many cases, a relatively long lead time is required from maintenance planning to execution. In situations in which the cause of a decrease in internal pressure is unknown, it is not possible to identify the parts to be replaced, and it is also difficult to formulate a maintenance plan.

The technology of the disclosure has been made in consideration of the above circumstances, and an object of the technology of the disclosure is to support investigation of a cause of an internal pressure change of a tire.

Means for Solving the Problem

A tire monitoring device according to a first aspect of the technology of the disclosure includes: an acquisition section that acquires internal pressure information indicating a transition of an internal pressure of a tire; an estimation section that estimates at least one cause of an internal pressure change based on a change pattern, which is a pattern of internal pressure change indicated by the internal pressure information; and an output section that outputs cause information indicating the estimated cause.

A tire monitoring device according to a second aspect of the technology of the disclosure is the tire monitoring device according to the first aspect, wherein: the tire monitoring device further includes a detection section that detects an abnormal internal pressure change based on the change pattern indicated by the internal pressure information; and the estimation section estimates the cause with respect to a tire for which an abnormal internal pressure change is detected.

A tire monitoring device according to a third aspect of the technology of the disclosure is the tire monitoring device according to the first aspect or the second aspect, wherein: the estimation section estimates the cause based on a rate of change in internal pressure indicated by the internal pressure information.

A tire monitoring device according to a fourth aspect of the technology of the disclosure is the tire monitoring device according to the first aspect or the second aspect, wherein: the estimation section estimates the cause by comparing plural reference patterns, which respectively correspond to plural causes of an internal pressure change, with the change pattern.

A tire monitoring device according to a fifth aspect of the technology of the disclosure is the tire monitoring device according to the first aspect or the second aspect, wherein: the estimation section estimates the cause based on the change pattern, before and after maintenance, indicated by the internal pressure information.

A tire monitoring device according to a sixth aspect of the technology of the disclosure is the tire monitoring device according to the first aspect or the second aspect, wherein: the estimation section estimates the cause using a classification model, which is learned by machine learning, with the change pattern as an input and the cause as an output.

A tire monitoring device according to a seventh aspect of the technology of the disclosure is the tire monitoring device according to any one of the first aspect to the sixth aspect, wherein: the output section outputs the cause information to a predetermined device and/or uploads the cause information to a website.

A tire monitoring device according to an eighth aspect of the technology of the disclosure is the tire monitoring device according to any one of the first aspect to the sixth aspect, wherein: the acquisition section acquires the internal pressure information for each of plural tires provided at each of plural vehicles; the estimation section estimates the cause for each vehicle and for each tire installation position; and the output section outputs the cause information for each vehicle and for each tire installation position.

A tire monitoring device according to a ninth aspect of the technology of the disclosure is the tire monitoring device according to the second aspect, wherein: the acquisition section acquires the internal pressure information for each of plural tires provided at each of plural vehicles; and the detection section detects an abnormal internal pressure change by comparing internal pressure information for each of the plural tires with each other.

A tire monitoring device according to a tenth aspect of the technology of the disclosure is the tire monitoring device according to any one of the first aspect to the ninth aspect, wherein: the tire monitoring device further includes a specifying section that specifies a countermeasure with respect to the cause estimated by the estimation section; and the output section outputs, together with the cause information, countermeasure information indicating the specified countermeasure.

A tire monitoring method according to an eleventh aspect of the technology of the disclosure is a method in which a computer executes processing, the processing including: acquiring internal pressure information indicating a transition of an internal pressure of a tire; estimating at least one cause of an internal pressure change based on a change pattern, which is a pattern of internal pressure change indicated by the internal pressure information; and outputting cause information indicating the estimated cause.

A tire monitoring program according to a twelfth aspect of the technology of the disclosure is a program that causes a computer to execute processing, the processing including: acquiring internal pressure information indicating a transition of an internal pressure of a tire; estimating at least one cause of an internal pressure change based on a change pattern, which is a pattern of internal pressure change indicated by the internal pressure information; and outputting cause information indicating the estimated cause.

Effect of the Invention

The technology of the disclosure enables support for investigating the cause of an internal pressure change of a tire.

Brief Description of the Drawings

Fig. 1 is a diagram illustrating an example of a configuration of a tire monitoring system according to an exemplary embodiment of the technology of the disclosure.
Fig. 2 is a diagram illustrating an example of a hardware configuration of a tire monitoring device according to an exemplary embodiment of the technology of the disclosure.

Fig. 3 is a functional block diagram illustrating an example of a functional configuration of a tire monitoring device according to an exemplary embodiment of the technology of the disclosure.

Fig. 4 is a diagram illustrating an example of a change pattern of an internal pressure of a tire indicated by internal pressure information according to an exemplary embodiment of the technology of the disclosure.

Fig. 5 is a diagram illustrating examples of a reference pattern according to an exemplary embodiment of the technology of the disclosure.

Fig. 6A is a diagram illustrating an example of a change pattern of an internal pressure of a tire before and after maintenance.

Fig. 6B is a diagram illustrating an example of a change pattern of an internal pressure of a tire before and after maintenance.

Fig. 7 is a flowchart illustrating an example of a flow of processing executed by a CPU of a tire monitoring device according to an exemplary embodiment of the technology of the disclosure executing a tire monitoring program.

Fig. 8 is a diagram illustrating an example of a display mode of cause information according to an exemplary embodiment of the technology of the disclosure.

Fig. 9A is a diagram illustrating an example of a change pattern of an internal pressure of a tire.

Fig. 9B is a diagram illustrating an example of a change pattern of an internal pressure of a tire.

Fig. 10 is a functional block diagram illustrating an example of a functional configuration of a tire monitoring device according to an exemplary embodiment of the technology of the disclosure.

Fig. 11A is a diagram illustrating an example of a mode in which a prediction section according to an exemplary embodiment of the technology of the disclosure predicts a threshold arrival timing.

Fig. 11B is a diagram illustrating an example of a mode in which a prediction section according to an exemplary embodiment of the technology of the disclosure predicts threshold arrival timings.

Fig. 12 is a flowchart illustrating an example of a flow of processing executed by a CPU of a tire monitoring device according to an exemplary embodiment of the technology of the disclosure executing a tire monitoring program.

Fig. 13 is a diagram illustrating an example of a display mode of timing information according to an exemplary embodiment of the technology of the disclosure.

Fig. 14 is a diagram illustrating an example of a display mode of timing information according to an exemplary embodiment of the technology of the disclosure.

Fig. 15 is a functional block diagram illustrating an example of a functional configuration of a tire monitoring device according to an exemplary embodiment of the technology of the disclosure.

Fig. 16 is a diagram illustrating another example of a display mode of timing information according to an exemplary embodiment of the technology of the disclosure.

Fig. 17 is a functional block diagram illustrating an example of a functional configuration of a tire monitoring device according to an exemplary embodiment of the technology of the disclosure.

Fig. 18 is a flowchart illustrating an example of a flow of processing executed by a CPU of a tire monitoring device according to an exemplary embodiment of the technology of the disclosure executing a tire monitoring program.

Fig. 19 is a diagram illustrating an example of a display mode of cause information, timing information, and an order of priority according to an exemplary embodiment of the technology of the disclosure.

Fig. 20 is a functional block diagram illustrating an example of a functional configuration of a tire monitoring device according to an exemplary embodiment of the technology of the disclosure.

Mode for Implementing the Invention

Explanation follows regarding an example of exemplary embodiments of the technology of the disclosure, with reference to the drawings. Note that in each of the drawings, the same or equivalent components and portions are appended with the same reference numerals, and duplicate explanation is omitted.

First Exemplary Embodiment

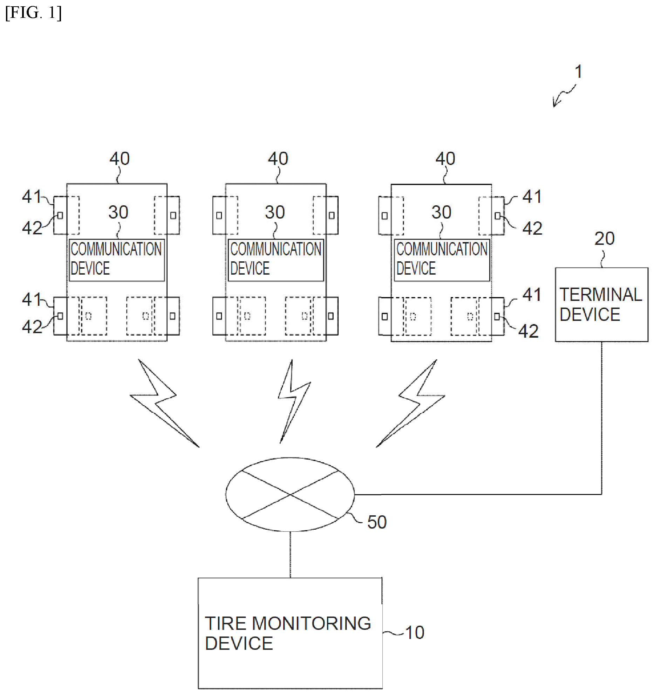

Fig. 1 is a diagram illustrating an example of a configuration of a tire monitoring system 1 according to an exemplary embodiment of the technology of the disclosure. The tire monitoring system 1 is a system for individually monitoring each of plural tires 41 installed at a vehicle 40 to be monitored. The tire monitoring system 1 includes an internal pressure sensor 42, a communication device 30, a tire monitoring device 10, and a terminal device 20.

In Fig. 1, three vehicles 40 each installed with six tires 41 are illustrated; however, the number of vehicles to be monitored by the tire monitoring system 1 may be less than three vehicles or four or more vehicles. The number of tires 41 installed at each vehicle 40 is also not particularly limited. The type of the vehicle 40 may be, for example, a commercial vehicle such as a dump truck used at a mine or a construction site; however, there is no limitation thereto. As another example, a passenger vehicle, a bus, a small truck, or the like may be an object to be monitored, and three or four tires being installed is also conceivable.

The internal pressure sensor 42 is provided at each tire 41 of each vehicle 40. The internal pressure sensor 42 outputs a measured value of internal pressure, which is a pressure of air inside the corresponding tire 41. Output of the measured value of the internal pressure by the internal pressure sensor 42 may be performed at any time, or may be performed intermittently. Intermittent output may be regular or irregular.

The communication device 30 is installed at each of the plural vehicles 40. The communication device 30 aggregates measured values of internal pressure output from each of the internal pressure sensors 42 provided at the respective tires 41 of the corresponding vehicle 40, and transmits these to the tire monitoring device 10. Namely, in the present exemplary embodiment, each of the communication devices 30 collectively transmits measured values of an internal pressure of each of the six tires 41 installed at the corresponding vehicle 40 to the tire monitoring device 10.

Vehicle identification information (vehicle ID) identifying the corresponding vehicle 40, and position identification information (position ID) identifying the installation position of the corresponding tire 41, are assigned to the measured values of internal pressure. This enables the tire monitoring device 10 to identify a tire, installed at which position of which vehicle, that the measured value of internal pressure transmitted from each communication device 30 pertains to. Each of the communication devices 30 transmits, via a network 50, such as the Internet, by wireless communication, measured values of internal pressure to the tire monitoring device 10. Transmission of measured values of internal pressure is performed at any time or intermittently. Namely, time series data of measured values of internal pressure for each vehicle 40 and for each installation position of the tire 41 is transmitted to the tire monitoring device 10. Time series data of measured values of an internal pressure for each vehicle and for each tire installation position is hereinafter referred to as "internal pressure information". The internal pressure information is real-time information indicating a transition of the internal pressure of the tire 41 for each vehicle and for each tire installation position.

The tire monitoring device 10 is a server computer having a function of individually monitoring each of the plural tires 41 installed at the respective plural vehicles 40. The tire monitoring device 10 may be installed at a site at which the vehicle 40 is operated, or may be installed at a remote location separated from the site, for example.

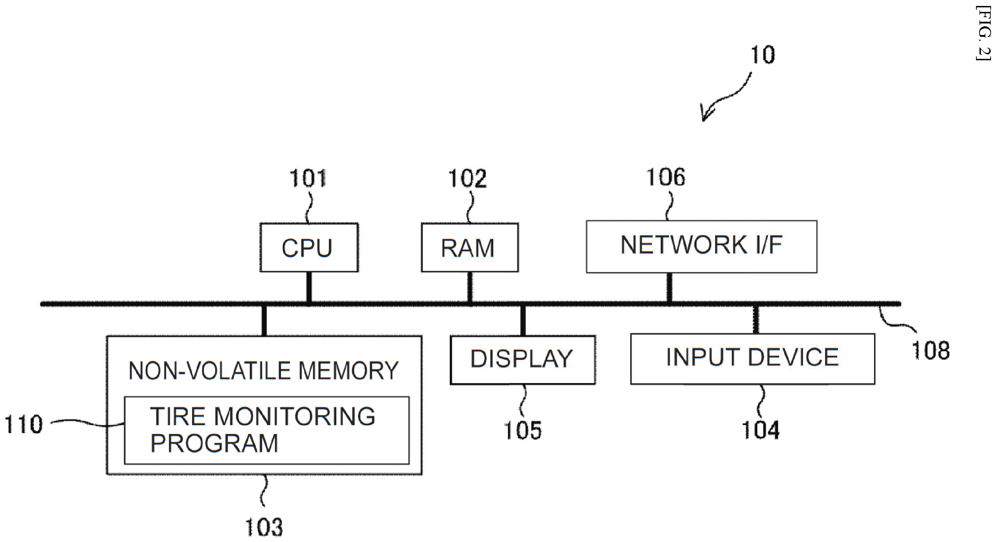

Fig. 2 is a diagram illustrating an example of a hardware configuration of the tire monitoring device 10. The tire monitoring device 10 includes a central processing unit (CPU) 101, random access memory (RAM) 102, non-volatile memory 103, an input device 104 including a keyboard and a mouse, a display 105, and a network interface 106. These hardware devices are connected to a bus 108.

The display 105 may be a touch panel display. The network interface 106 is an interface for communicating via the network 50. The communication method may be either wired or wireless. As for wireless communication, for example, a method conforming to an existing wireless communication standard such as Wi-Fi (registered trademark) or the like can be applied.

The non-volatile memory 103 is a non-volatile storage medium such as a hard disk or flash memory. A tire monitoring program 110 is stored in the non-volatile memory 103. The RAM 102 is work memory for the CPU 101 to execute processing. The CPU 101 loads the tire monitoring program 110 stored in the non-volatile memory 103 into the RAM 102, and executes processing according to the tire monitoring program 110.

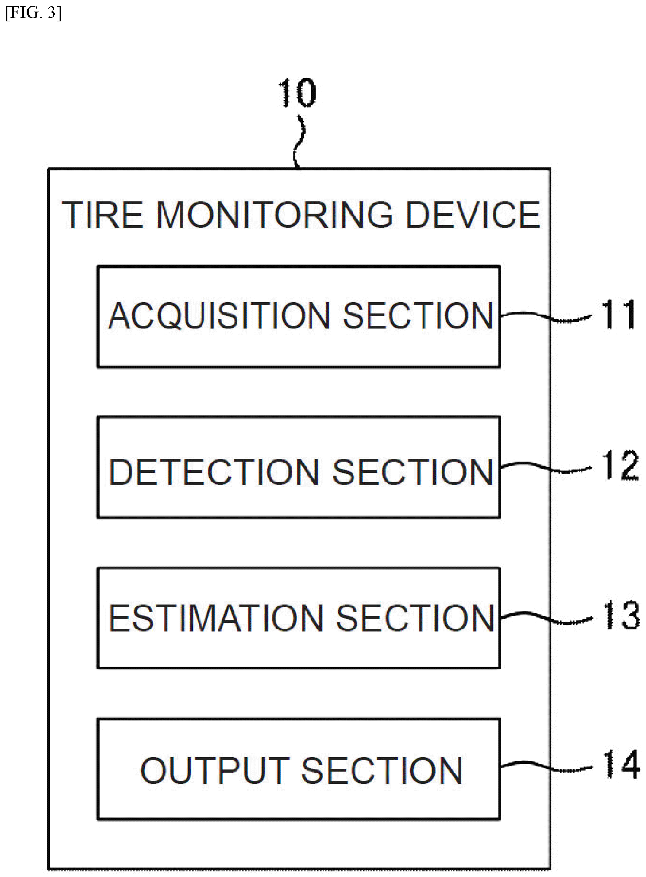

Fig. 3 is a functional block diagram illustrating an example of a functional configuration of the tire monitoring device 10. The tire monitoring device 10 includes an acquisition section 11, a detection section 12, an estimation section 13, and an output section 14. By the CPU 101 executing the tire monitoring program 110, the tire monitoring device 10 functions as the acquisition section 11, the detection section 12, the estimation section 13, and the output section 14.

The acquisition section 11 acquires internal pressure information, which is time series data of measured values of an internal pressure of a tire for each vehicle and for each tire installation position, transmitted from each communication device 30.

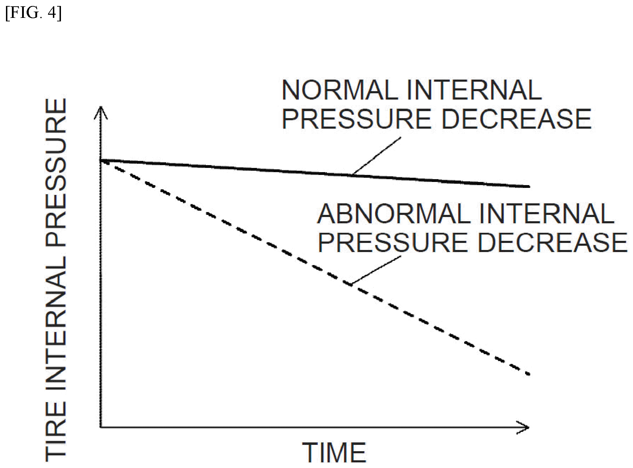

The detection section 12 detects an abnormal internal pressure change for each vehicle and for each tire installation position based on a pattern of internal pressure change (hereinafter referred to as a change pattern) indicated by the internal pressure information acquired by the acquisition section 11. Fig. 4 is a diagram illustrating an example of a change pattern of the tire 41 indicated by internal pressure information. In Fig. 4, a change pattern in a case in which a normal internal pressure change has occurred is illustrated by a solid line, and a change pattern in a case in which an abnormal internal pressure change has occurred is illustrated by a dashed line. Note that "normal internal pressure change" means an internal pressure decrease due to a natural leak, and "abnormal internal pressure change" means an internal pressure decrease due to a cause other than a natural leak.

As illustrated in Fig. 4, in a case in which a normal internal pressure change has occurred, the internal pressure of the tire gradually decreases over time. On the other hand, in a case in which an abnormal internal pressure change has occurred, the rate of decrease in the internal pressure of the tire is higher than compared to a normal internal pressure change. The detection section 12 may determine that an abnormal internal pressure change has occurred in the tire 41 in a case in which a rate of decrease in the internal pressure of the tire indicated by the internal pressure information (namely, an amount of decrease in the internal pressure of the tire in a predetermined period of time) exceeds a predetermined value. By the detection section 12 detecting an abnormal internal pressure change based on the change pattern of the internal pressure, an abnormality of the tire can be detected before the internal pressure of the tire falls below a threshold value. Furthermore, the detection section 12 may detect an abnormal internal pressure change by comparing internal pressure information for each of plural tires, provided at each of plural vehicles, with each other. It is conceivable that the characteristics of the change pattern in a case in which an abnormal internal pressure change has occurred are different from the characteristics of the change pattern in a case in which a normal internal pressure change has occurred, such that an abnormal internal pressure change can be detected by comparing internal pressure information for each of plural tires with each other.

In a case in which an abnormal internal pressure change is detected by the detection section 12, the estimation section 13 estimates at least one cause of the abnormal internal pressure change with respect to the tire for which the abnormal internal pressure change has been detected. The estimation section 13 estimates the cause based on the change pattern of the internal pressure indicated by the internal pressure information.

Causes of an internal pressure change of the tire 41 include an abnormality of a valve, a crack of a rim, an abnormality of an O-ring, a side cut, and the like. The mode of the internal pressure change varies depending on the cause. Namely, the change pattern of the internal pressure indicates a unique pattern in accordance with the cause. This enables the cause of the internal pressure change to be estimated by analyzing the change pattern of the internal pressure indicated by the internal pressure information.

For example, the estimation section 13 may estimate the cause of the internal pressure change by comparing plural reference patterns associated with each of plural causes of an internal pressure change with the change pattern of the internal pressure indicated by the internal pressure information. More specifically, the estimation section 13 may estimate, from among plural reference patterns prepared for each cause of an internal pressure change, a cause corresponding to a reference pattern with the highest similarity to a change pattern of an internal pressure indicated by the internal pressure information, as a cause of the internal pressure change.

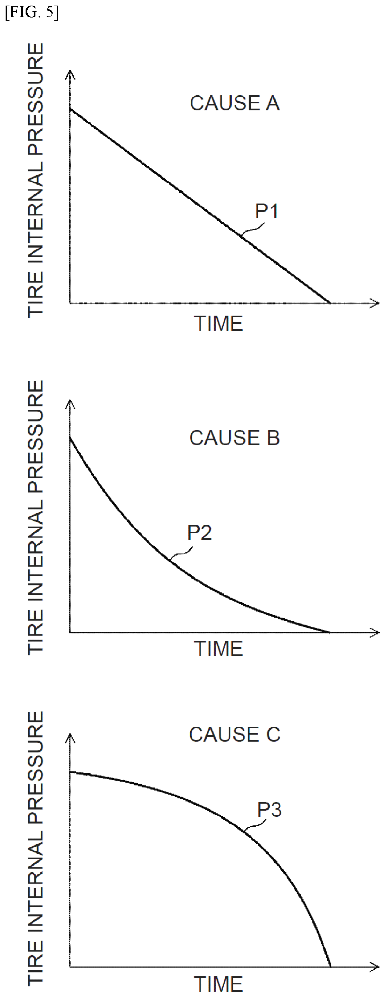

The reference pattern may be a representative pattern or a typical pattern of an internal pressure change caused by a corresponding cause, and for example, may be created based on past examples. Fig. 5 is diagram illustrating examples of a reference pattern. Three reference patterns P1, P2, and P3 are illustrated in Fig. 5. The reference pattern P1 is a representative pattern or a typical pattern of an internal pressure change caused by a cause A. The reference pattern P2 is a representative pattern or a typical pattern of an internal pressure change caused by a cause B. The reference pattern P3 is a representative pattern or a typical pattern of an internal pressure change caused by a cause C. Note that Fig. 5 is intended to facilitate understanding of the technology of the disclosure, and does not necessarily indicate that patterns and phenomena of cause correspond to each other.

The estimation section 13 may estimate the cause of an internal pressure change using a classification model learned by machine learning. The classification model is a model in which a change pattern is input, and a cause corresponding to the input change pattern is output. The classification model is learned by machine learning using, as learning data, a combination of a change pattern and correct data indicating a cause corresponding to the change pattern.

The estimation section 13 may estimate the cause of an internal pressure change based on a rate of change in internal pressure indicated by the internal pressure information. The rate of decrease in the internal pressure of the tire 41 varies depending on the cause. This enables the cause of the internal pressure change to be estimated based on the rate of change in internal pressure indicated by the internal pressure information.

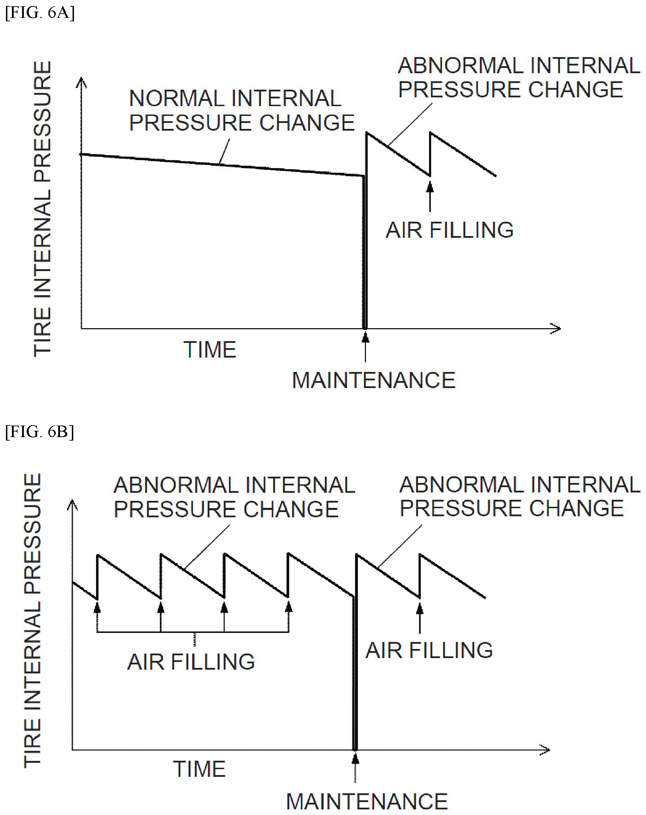

The estimation section 13 may estimate the cause of an internal pressure change based on a change pattern of the internal pressure, before and after maintenance of the tire, indicated by the internal pressure information. As illustrated in Fig. 6A, for example, in a case in which a normal change pattern is indicated prior to maintenance of a tire, but an abnormal change pattern is indicated after maintenance, the abnormal internal pressure change is considered to have occurred due to a maintenance work failure. Therefore, in such a case, anything unrelated to maintenance work can be excluded as a cause of the abnormal internal pressure change after maintenance, and a cause other than the above can be estimated.

On the other hand, as illustrated in Fig. 6B, in a case in which a change pattern indicating an abnormal internal pressure change appears before and after maintenance of the tire, the internal pressure change is considered not to be due to a component replaced by maintenance work or a maintenance work failure. Therefore, in such a case, a cause related to a replaced component and a work failure can be excluded, and a cause other than the above can be estimated. In this manner, it is possible to estimate the cause based on a change pattern of internal pressure, before and after maintenance of the tire, indicated by the internal pressure information.

Note that during maintenance, it is normal for all of the air of the tire to be released once. This enables a time point at which the internal pressure of the tire indicated by the internal pressure information becomes zero to be regarded as a maintenance time point. Furthermore, the communication device 30 may be accessed from the outside, and information indicating a maintenance time point may be assigned to the internal pressure information.

The output section 14 outputs cause information indicating the cause of an internal pressure change estimated by the estimation section 13. The output section 14 may upload the cause information to a predetermined website.

The terminal device 20 is a communication terminal device used by an operator who carries outs overall management of plural vehicles 40. The terminal device 20 may be installed at a site at which plural vehicles 40 are operated, or may be installed at a remote location separated from the site. Furthermore, the terminal device 20 may be installed at each of the plural vehicles 40. In such a case, the terminal device 20 may be used by a driver of each vehicle 40.

The terminal device 20 accesses the website to which the cause information has been uploaded, thereby enabling the cause information to be displayed at a display (not illustrated in the drawings) of the terminal device 20. This enables the operator to understand in real time that an abnormal internal pressure change has occurred in a tire for each vehicle and for each tire installation position, and the cause thereof. Note that the output section 14 may directly transmit the cause information to the terminal device 20.

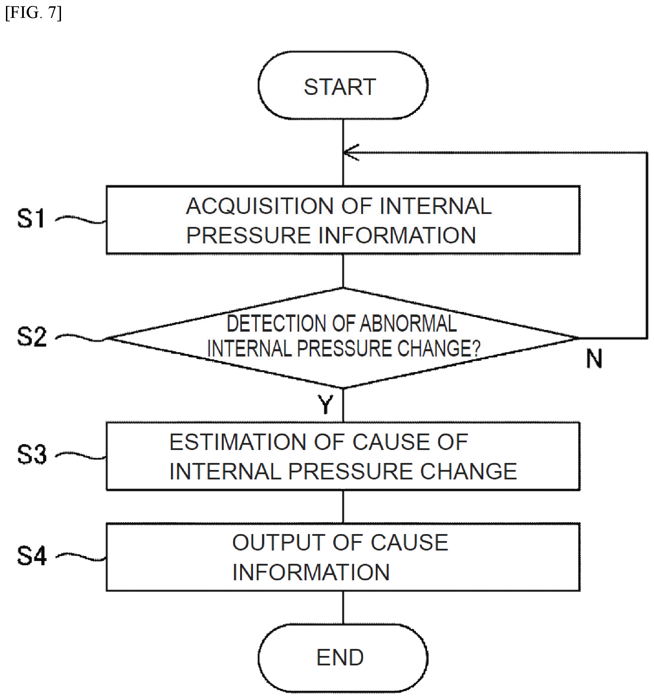

Fig. 7 is a flowchart illustrating an example of a flow of processing executed by the CPU 101 of the tire monitoring device 10 executing the tire monitoring program 110.

At step S1, the acquisition section 11 acquires internal pressure information, which is time series data of measured values of an internal pressure of a tire for each vehicle and for each tire installation position, transmitted from each communication device 30.

At step S2, the detection section 12 determines whether or not an abnormal internal pressure change has occurred for each vehicle and for each tire installation position, based on the change pattern of internal pressure indicated by the internal pressure information acquired at step S1. In a case in which an abnormal internal pressure change is detected, the processing transitions to step S3, and in a case in which an abnormal internal pressure change is not detected, the processing returns to processing step S1.

At step S3, with respect to a tire for which an abnormal internal pressure change has been detected, the estimation section 13 estimates at least one cause of the abnormal internal pressure change based on the change pattern of internal pressure indicated by the internal pressure information acquired at step S1.

At step S4, the output section 14 outputs the cause information indicating the cause of the internal pressure change estimated at step S3. The output section 14 may upload the cause information to a predetermined website.

By the terminal device 20 accessing the aforementioned predetermined website, the cause information output at step S4 is displayed at the display (not illustrated in the drawings) of the terminal device 20. Therefore, the operator using the terminal device 20 can understand in real time that an abnormal internal pressure change has occurred in a tire for each vehicle and for each tire installation position, and the cause thereof. Note that the output section 14 may directly transmit the cause information to the terminal device 20 at step S4.

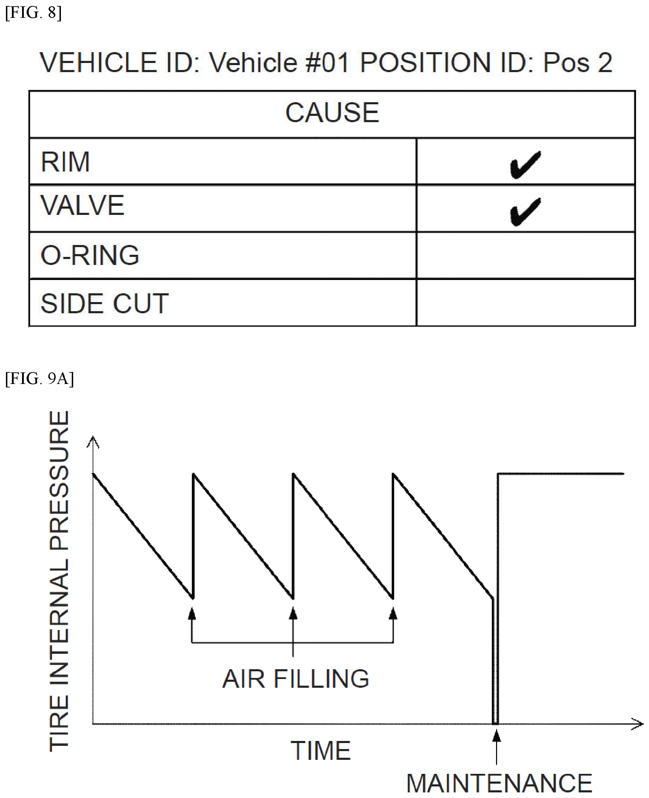

Fig. 8 is a diagram illustrating an example of a display mode of cause information displayed at the display of the terminal device 20. Vehicle identification information (vehicle ID) identifying the corresponding vehicle, and position identification information (position ID) identifying the installation position of the corresponding tire are assigned to the cause information. The cause information is displayed in such a manner so as to be able to understand which of plural causes anticipated in advance is the estimated cause. The cause information may be displayed in a list format as illustrated in Fig. 8, for example.

As described above, the tire monitoring device 10 according to the first exemplary embodiment of the technology of the disclosure includes the acquisition section 11 that acquires internal pressure information indicating a transition of an internal pressure of a tire, the detection section 12 that detects an abnormal internal pressure change based on a change pattern indicated by the internal pressure information, the estimation section 13 that estimates at least one cause of an internal pressure change with respect to a tire for which an abnormal internal pressure change has been detected based on a pattern of internal pressure change indicated by the internal pressure information, and the output section 14 that outputs cause information indicating the estimated cause.

In existing TPMS, although it is possible to issue a warning in a case in which the internal pressure of a tire has decreased, it is not possible to estimate and provide notification of the cause of the decrease in internal pressure. Therefore, as illustrated in Fig. 9A, a case may arise in which only a response of refilling air is taken, with respect to an abnormality that is not resolved simply by refilling air, and the abnormality is noticed during repeated refilling of air in response to warnings that are issued frequently. Until an abnormality is noticed, the tire is used at an internal pressure that is outside of an appropriate range. As a result, tire durability is reduced, and customer value, such as safety and long-term use, is impaired. Furthermore, multiple causes are also conceivable as the cause of the decrease in the internal pressure of the tire. Therefore, multiple inspections need to be performed at a maintenance site in order to investigate the cause, and work at the site becomes complicated.

Furthermore, the time required for maintenance work varies greatly for each cause of a decrease in internal pressure, such that it is difficult to predict the work time in situations in which the cause is unknown. In a case in which the working time is longer than planned, revisions to the original maintenance plan are necessary. On the other hand, in a case in which the working time becomes shorter than planned, a loss such as availability of personnel occurs.

In addition, some parts that require replacement in maintenance work are expensive to obtain and take time to obtain, and in many cases, a relatively long lead time is required from maintenance planning to execution. In situations in which the cause of a decrease in internal pressure is unknown, it is not possible to identify the parts to be replaced, and it is also difficult to formulate a maintenance plan.

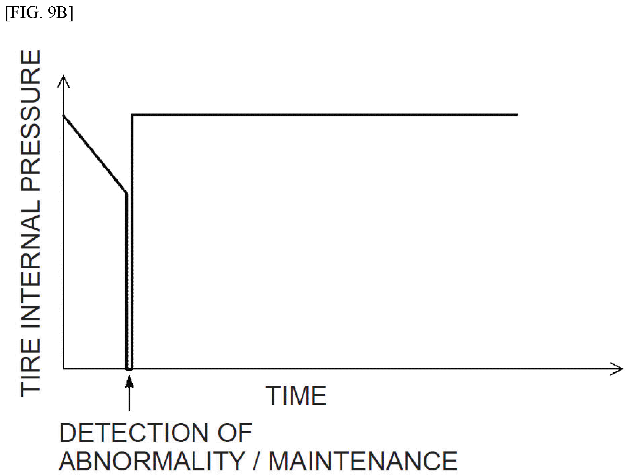

Since the tire monitoring device 10 according to the first exemplary embodiment of the technology of the disclosure estimates the cause with respect to a tire for which an abnormal internal pressure change has been detected, and presents cause information indicating the estimated cause, as illustrated in Fig. 9B, appropriate measures can be taken immediately after the abnormality has been detected. In other words, it is possible to avoid a situation in which an abnormality is not noticed and appropriate measures are not performed over a long period of time.

Furthermore, according to the tire monitoring device 10, since a cause of an internal pressure change is estimated, some or all of the inspection for investigating the cause can be omitted, enabling the load of maintenance work to be reduced. In addition, the estimation of the cause of the internal pressure change enables the time required for maintenance work to be predicted, and enables a component requiring replacement to be understood. This enables a maintenance plan to be formulated at a relatively early stage.

As described above, the tire monitoring device 10 according to the first exemplary embodiment of the technology of the disclosure enables support for investigating the cause of an internal pressure change of a tire.

Second Exemplary Embodiment

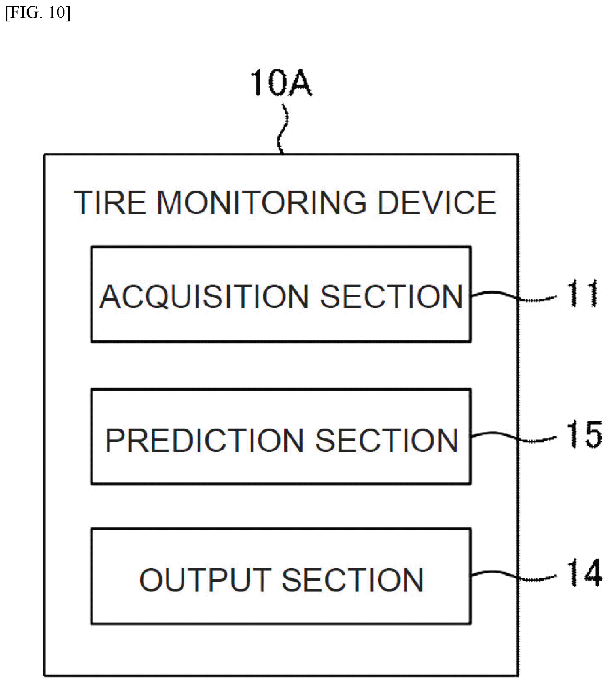

Fig. 10 is a functional block diagram illustrating an example of a functional configuration of a tire monitoring device 10A according to a second exemplary embodiment of the technology of the disclosure. The tire monitoring device 10A includes the acquisition section 11, a prediction section 15, and the output section 14. By the CPU 101 executing the tire monitoring program 110, the tire monitoring device 10A functions as the acquisition section 11, the prediction section 15, and the output section 14.

The acquisition section 11 acquires internal pressure information, which is time series data of measured values of an internal pressure of a tire for each vehicle and for each tire installation position, transmitted from each communication device 30.

The prediction section 15 predicts a timing at which the internal pressure of a corresponding tire will reach a threshold value (hereinafter referred to as a threshold arrival timing), based on a change pattern that is a pattern of internal pressure change indicated by the internal pressure information. The "threshold value" is, for example, an internal pressure level at which maintenance is recommended to be carried out. The threshold value can be set as an arbitrary value. The prediction section 15 predicts the threshold arrival timing for each vehicle and for each tire installation position based on a change pattern of an internal pressure for each vehicle and for each tire installation position.

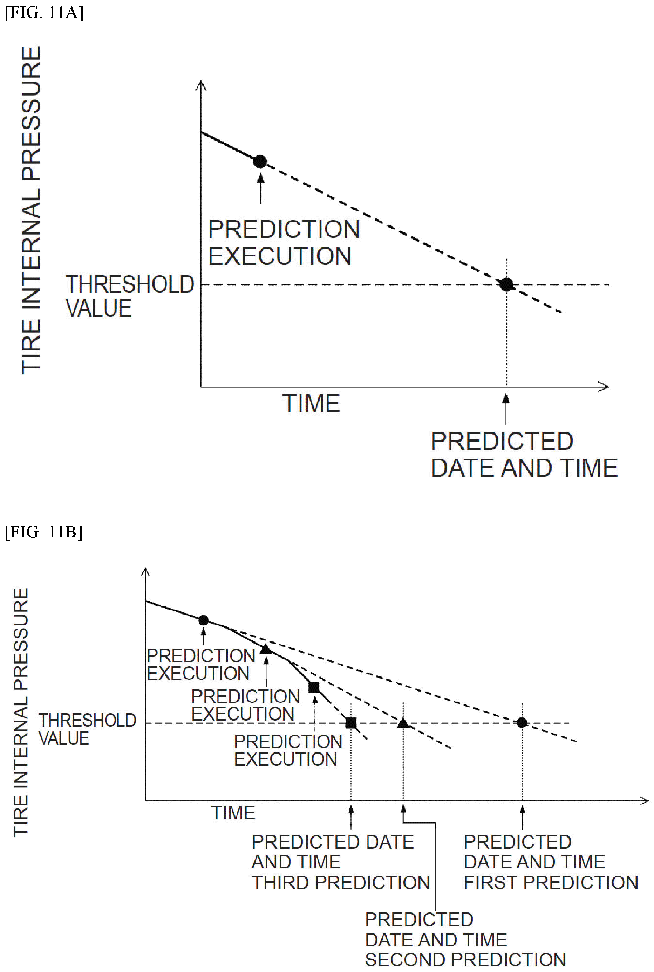

Fig. 11A and Fig. 11B are diagrams illustrating an example of a mode in which the prediction section 15 predicts a threshold arrival timing. The prediction section 15 predicts the threshold arrival timing based on the rate of change in internal pressure indicated by the internal pressure information. Namely, the prediction section 15 specifies the rate of change in (the slope of the change pattern of) the internal pressure at a prediction execution time point, and predicts a date and time when the internal pressure will reach the threshold value in a case in which the rate of change is maintained.

Note that it is anticipated that the rate of change in internal pressure is not constant. For example, in a case in which the rate of change in internal pressure becomes higher as the decrease in the internal pressure progresses, the threshold value will be reached at a timing that is faster than the threshold arrival timing originally predicted. Therefore, as illustrated in Fig. 11B, the prediction section 15 sequentially predicts the threshold arrival timing, and sequentially updates the prediction results. This enables a deviation between a predicted result and the actual result to be reduced, even in a case in which the rate of change in internal pressure is not constant. Execution of prediction by the prediction section 15 may be regular or irregular.

The output section 14 outputs timing information indicating the threshold arrival timing predicted by the prediction section 15. The output section 14 sequentially updates and outputs the timing information in response to the sequential prediction of the threshold arrival timing by the prediction section 15. Namely, the prediction section 15 sequentially performs processing to predict the threshold arrival timing based on the latest internal pressure information, and the output section 14 sequentially performs processing to output timing information indicating the latest predicted result. The output section 14 may upload the timing information to a predetermined website.

By the terminal device 20 accessing the aforementioned predetermined website, the timing information output by the output section 14 can be displayed at the display (not illustrated in the drawings) of the terminal device 20. This enables the operator to understand in advance the timing at which an internal pressure of a tire will reach a threshold value (that is, the timing at which maintenance should be carried out) for each vehicle and for each tire installation position. Note that the output section 14 may directly transmit the timing information to the terminal device 20.

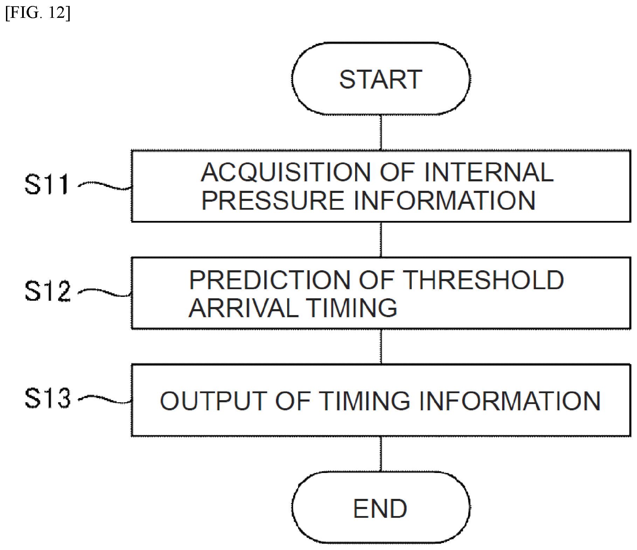

Fig. 12 is a flowchart illustrating an example of a flow of processing executed by the CPU 101 of the tire monitoring device 10A executing the tire monitoring program 110.

At step S11, the acquisition section 11 acquires internal pressure information, which is time series data of measured values of an internal pressure of a tire for each vehicle and for each tire installation position, transmitted from each communication device 30.

At step S12, the prediction section 15 predicts, for each tire 41 of each vehicle 40, a threshold arrival timing at which the internal pressure of the tire will reach a threshold value, based on a change pattern that is a pattern of internal pressure change indicated by the internal pressure information acquired at step S11.

At step S13, the output section 14 outputs timing information indicating the threshold arrival timing predicted at step S12. The output section 14 may upload the timing information to a predetermined website.

By the terminal device 20 accessing the aforementioned predetermined website, the timing information output at step S13 is displayed on the display (not illustrated in the drawings) of the terminal device 20. This enables the operator using the terminal device 20 to understand in advance the timing at which an internal pressure of a tire will reach a threshold value (that is, the timing at which maintenance should be carried out) for each vehicle and for each tire installation position. Note that in step S13, the output section 14 may directly transmit the timing information to the terminal device 20.

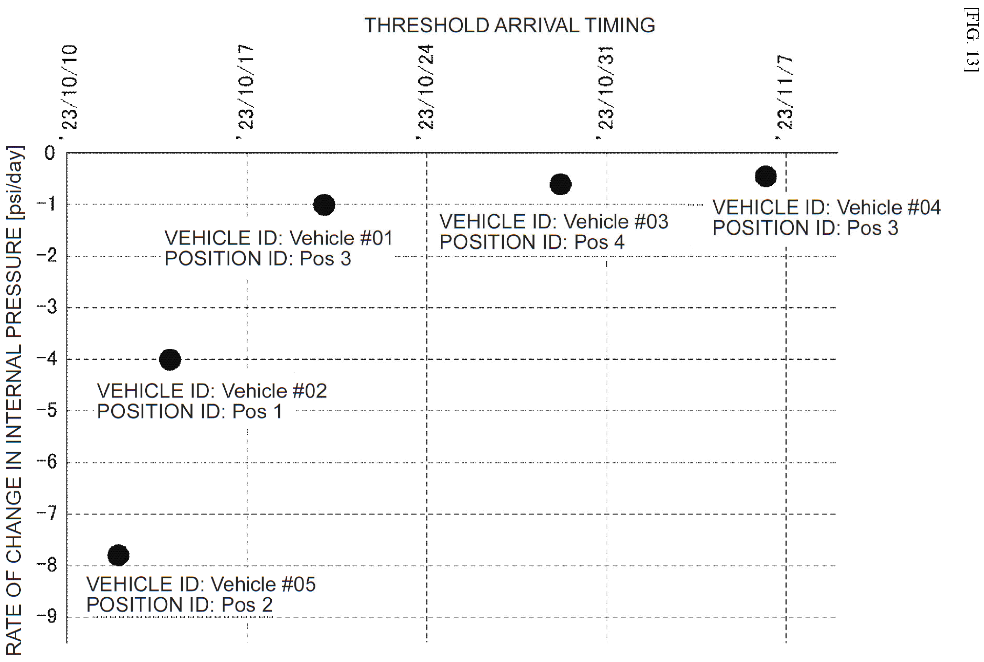

Fig. 13 is a diagram illustrating an example of a display mode of timing information displayed at the display of the terminal device 20. Vehicle identification information (vehicle ID) identifying the corresponding vehicle, and position identification information (position ID) identifying the installation position of the corresponding tire are assigned to the timing information. As illustrated in Fig. 13, for example, the timing information may be displayed using a chart in which a date on which the internal pressure of a tire will reach a threshold value is plotted on a first axis (the horizontal axis) and a rate of change in internal pressure of a tire is plotted on a second axis (the vertical axis). The output section 14 may output, as timing information, a plot of a prediction result by the prediction section 15 at a corresponding position in the aforementioned chart. By displaying the timing information using the aforementioned chart, the operator can easily understand the internal pressure of which tire of which vehicle will reach the threshold value the earliest. Furthermore, since the rate of change in internal pressure of the tire is also displayed, the severity of the situation for each tire can be easily understood.

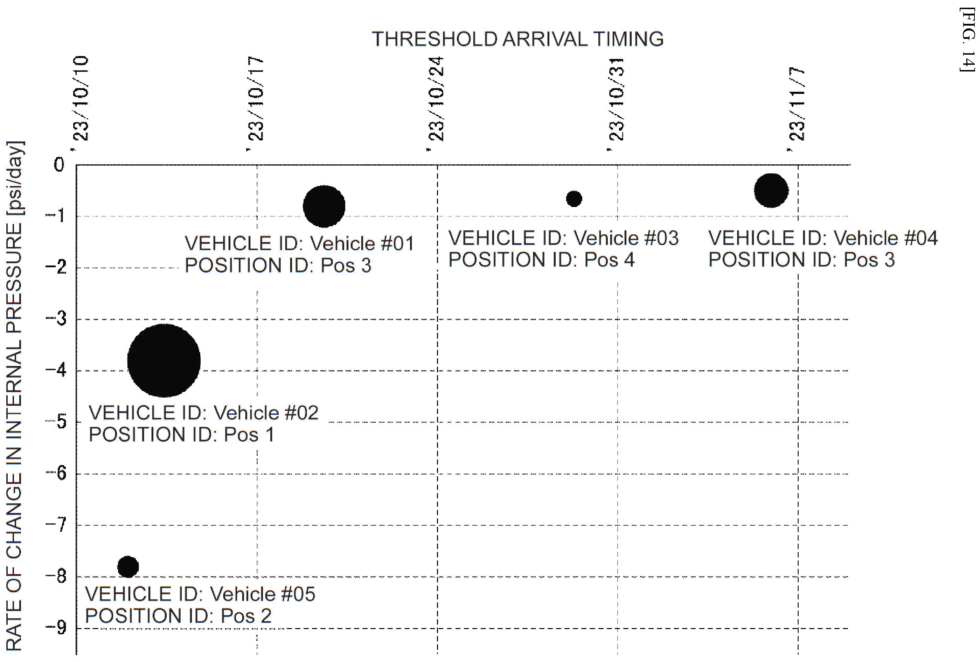

Fig. 14 is a diagram illustrating another example of a display mode of timing information displayed at the display of the terminal device 20. As illustrated in Fig. 14, the output section 14 may reflect the cumulative number of times maintenance has been carried out in the past for each vehicle and for each tire installation position in the size of a point plotted in a chart. In the chart illustrated in Fig. 14, the size of a plotted point becomes larger as the cumulative number of times maintenance has been carried out in the past with respect to an installation position of the tire of the vehicle is greater. Information indicating the cumulative number of times of maintenance for each vehicle and for each tire installation position may be stored in, for example, the non-volatile memory 103 of the tire monitoring device 10A. Reflecting the cumulative number of times of maintenance in the size of a point plotted in the chart enables the operator to infer the tire situation and the degree of difficulty in handling the situation, and enables the operator to use this as a basis for a decision when determining an order of priority for carrying out maintenance, for example, with respect to plural tires for which maintenance is planned.

As described above, the tire monitoring device 10A according to the second exemplary embodiment of the technology of the disclosure includes the acquisition section 11 that acquires internal pressure information indicating a transition of an internal pressure of a tire, the prediction section 15 that predicts a timing at which the internal pressure of the tire will reach a threshold value based on a pattern of internal pressure change indicated by the internal pressure information, and the output section 14 that outputs timing information indicating the predicted timing.

Currently, measures are taken to carry out maintenance on a target tire in a case in which a warning has been issued from a TPMS; however, it is considered that it would be easy to secure resources such as facilities, parts, and personnel if the target tire can be incorporated into a maintenance plan prior to the issuance of the warning. In addition, according to current measures, in a case in which an unexpected situation has occurred, such as a sudden increase in the rate of decrease in internal pressure, an emergency response is necessary, and a significant revision to the original maintenance plan is sometimes necessary. In such a case, it may be difficult to secure resources such as facilities, parts, and personnel.

In the tire monitoring device 10A according to the second exemplary embodiment of the technology of the disclosure, timing information indicating a timing at which the internal pressure of a tire will reach a threshold value is presented, such that a target tire can be incorporated into a maintenance plan prior to the internal pressure of the tire reaching the threshold value. This enables resources such as facilities, parts, and personnel to be easily secured.

In addition, in the tire monitoring device 10A according to the present exemplary embodiment, prediction of threshold arrival timings is sequentially performed, and timing information is sequentially updated, such that appropriate prediction results can be obtained, even in a case in which an unexpected situation has occurred, such as a sudden increase in the rate of decrease in internal pressure. This enables a risk of occurrence of a significant revision to the maintenance plan to be suppressed.

As described above, the tire monitoring device 10 according to the second exemplary embodiment of the technology of the disclosure can support the formulation of a tire maintenance plan.

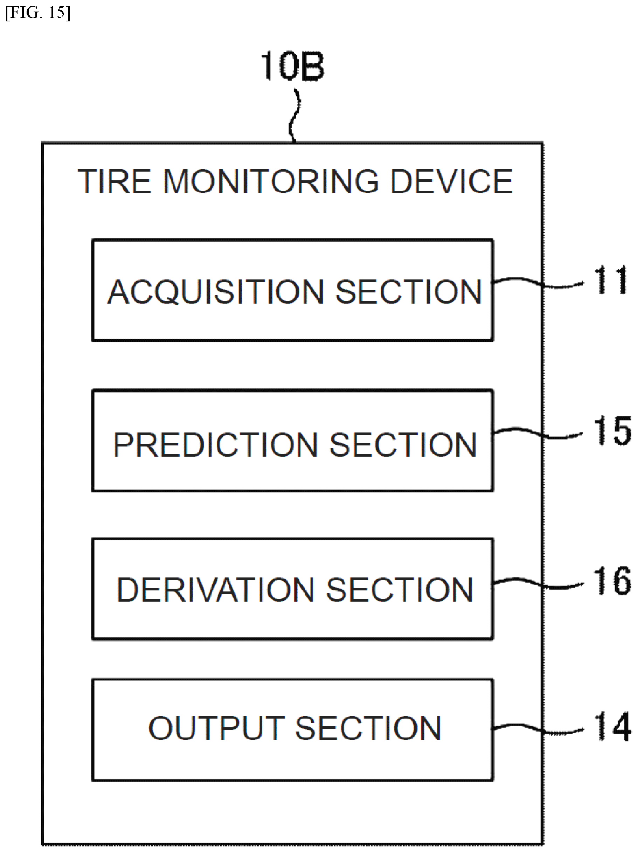

Fig. 15 is a functional block diagram illustrating an example of a functional configuration of a tire monitoring device 10B according to a modified example. The tire monitoring device 10B differs from the above-described tire monitoring device 10A (see Fig. 10) in that the tire monitoring device 10B further includes a derivation section 16.

The derivation section 16 derives an order of priority for carrying out of maintenance based on a change pattern of internal pressure indicated by the internal pressure information acquired by the acquisition section 11 and the threshold arrival timing predicted by the prediction section 15. The derivation section 16 may derive the order of priority based on, for example, a priority Y represented by the following equation (1). In Equation (1), $X_1$ is a score corresponding to a rate of change in internal pressure specified from the change pattern of internal pressure. $X_2$ is a score corresponding to the threshold arrival timing predicted by the prediction section 15. $X_3$ is a score corresponding to the cumulative number of times maintenance has been carried out in the past at the tire installation position of the vehicle. $k_1$, $k_2$, and $k_3$ are weighting coefficients. The derivation section 16 assigns a relatively high order of priority to a tire having a relatively high priority Y value derived using Equation (1). The output section 14 outputs the order of priority derived by the derivation section 16. Note that priority may be derived using only one or two of the scores $X_1$, $X_2$, and $X_3$, or priority may be derived using scores other than those described above.

$$Y = k_1 \cdot X_1 + k_2 \cdot X_2 + k_3 \cdot X_3 \quad \cdot \cdot \cdot \quad (1)$$

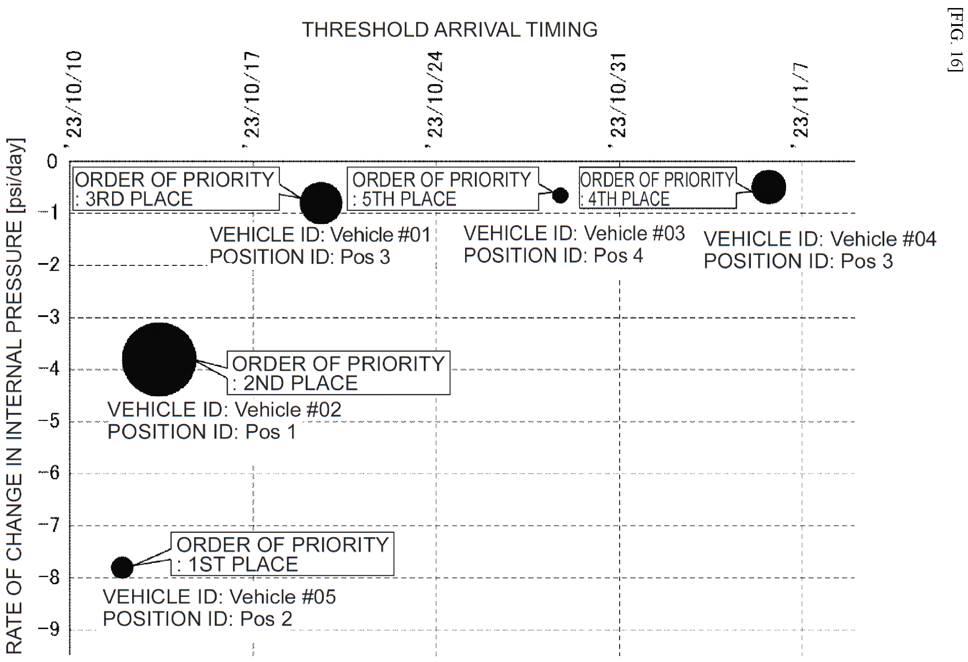

Fig. 16 is a diagram illustrating another example of a display mode of timing information displayed at the display of the terminal device 20. As illustrated in Fig. 16, among the plural points at which predicted results of threshold arrival timings are plotted, an order of priority for carrying out of maintenance of each tire derived by the derivation section 16 may be displayed in the vicinity of the corresponding point.

Third Exemplary Embodiment

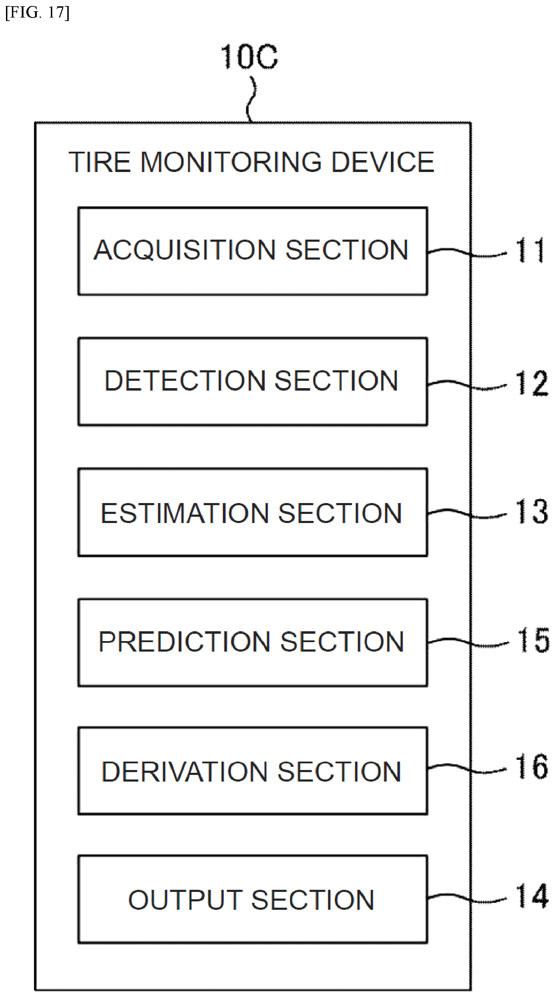

Fig. 17 is a functional block diagram illustrating an example of a functional configuration of a tire monitoring device 10C according to a third exemplary embodiment of the technology of the disclosure. The tire monitoring device 10C includes the acquisition section 11, the detection section 12, the estimation section 13, the prediction section 15, the derivation section 16, and the output section 14. Namely, the tire monitoring device 10C has a configuration in which the tire monitoring device 10 (see Fig. 3) according to the above-described first exemplary embodiment and the tire monitoring device 10A (see Fig. 10) and 10B (see Fig. 15) according to the above-described second exemplary embodiment are combined. Details of each of the above functional sections are as described above.

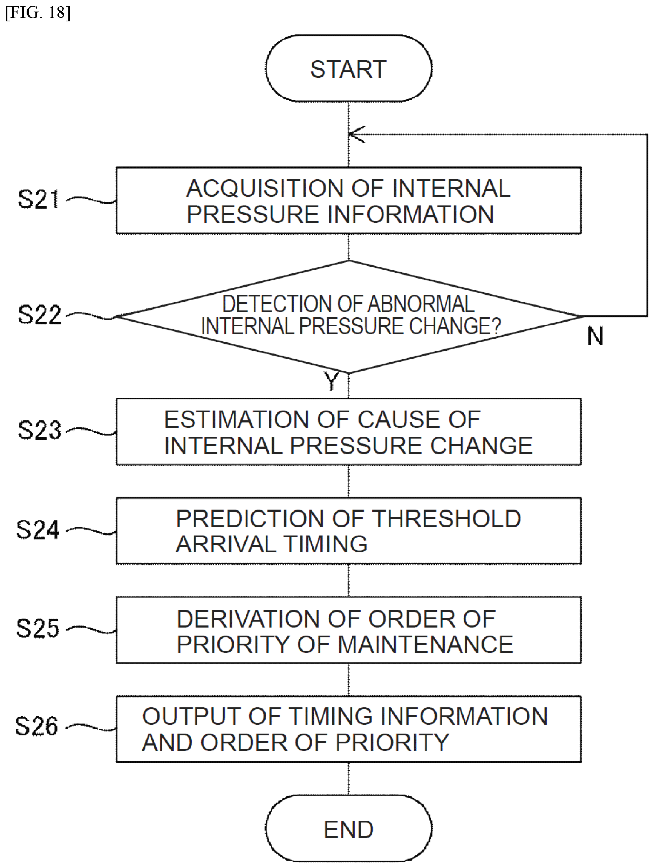

Fig. 18 is a flowchart illustrating an example of a flow of processing executed by the CPU 101 of the tire monitoring device 10C executing the tire monitoring program 110.

At step S21, the acquisition section 11 acquires internal pressure information, which is time series data of measured values of an internal pressure of a tire for each vehicle and for each tire installation position, transmitted from each communication device 30.

At step S22, the detection section 12 determines whether or not an abnormal internal pressure change has occurred for each vehicle and for each tire installation position, based on a change pattern of internal pressure indicated by the internal pressure information acquired at step S21. In a case in which an abnormal internal pressure change is detected, the processing transitions to step S23, and in a case in which an abnormal internal pressure change is not detected, the processing returns to processing step S21.

At step S23, with respect to a tire for which an abnormal internal pressure change has been detected, the estimation section 13 estimates at least one cause of the abnormal internal pressure change based on the change pattern of internal pressure indicated by the internal pressure information acquired at step S21.

At step S24, the prediction section 15 predicts, for each tire 41 of each vehicle 40, a threshold arrival timing at which the internal pressure of the tire will reach a threshold value, based on a change pattern that is a pattern of internal pressure change indicated by the internal pressure information acquired at step S21.

At step S25, the derivation section 16 derives an order of priority for carrying out of maintenance based on the change pattern of internal pressure indicated by the internal pressure information acquired at step S21 and the threshold arrival timing predicted at step S24. The derivation section 16 may use the determination result in step S22 as an element for deriving an order of priority.

At step S26, the output section 14 outputs timing information indicating the threshold arrival timing predicted at step S24 and the order of priority derived at step S25. Note that the output section 14 may output the cause information indicating the cause of the internal pressure change estimated at step S23 along with the timing information and the order of priority. The output section 14 may upload each of the above-described pieces of information to a predetermined website.

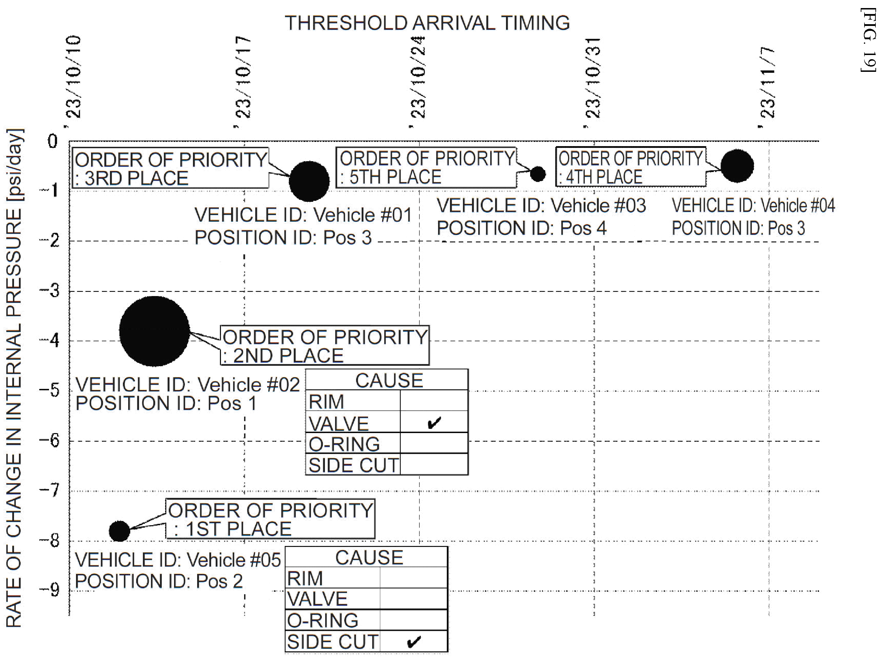

By the terminal device 20 accessing the aforementioned predetermined website, the cause information, the timing information, and the order of priority output by the output section 14 can be displayed at the display (not illustrated in the drawings) of the terminal device 20. Fig. 19 is a diagram illustrating an example of a display mode of each piece of information described above displayed at the display of the terminal device 20. As illustrated in Fig. 19, for example, the timing information may be displayed using a chart in which a date on which the internal pressure of a tire will reach a threshold value is plotted on a first axis (the horizontal axis), and a rate of change in internal pressure of a tire is plotted on a second axis (the vertical axis). The output section 14 may output, as timing information, a plot of a prediction result by the prediction section 15 at a corresponding position in the aforementioned chart. Furthermore, among the plural points at which predicted results of threshold arrival timings are plotted, cause information and an order of priority for carrying out of maintenance may be displayed in the vicinity of the corresponding point.

The tire monitoring device 10C according to the third exemplary embodiment of the technology of the disclosure enables support for investigating the cause of an internal pressure change of a tire and support for the formulation of a tire maintenance plan.

Fourth Exemplary Embodiment

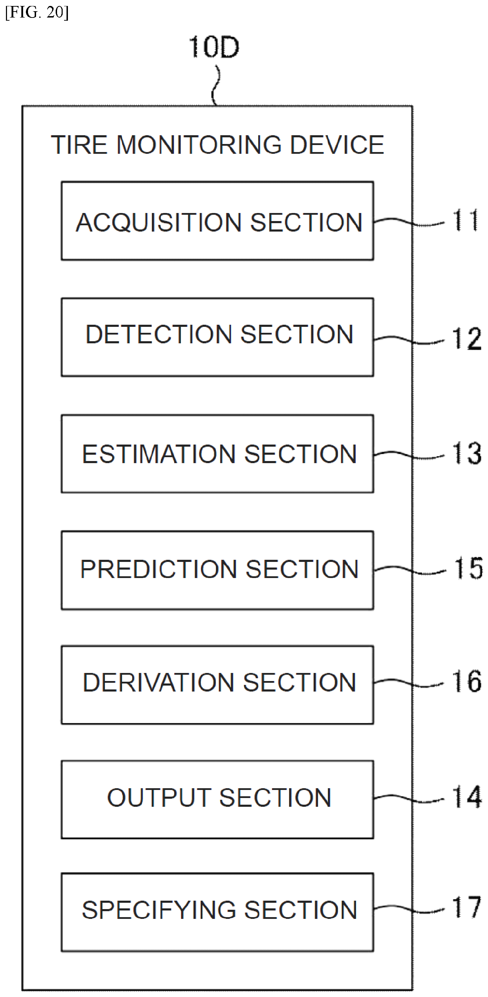

Fig. 20 is a functional block diagram illustrating an example of a functional configuration of a tire monitoring device 10D according to a fourth exemplary embodiment of the technology of the disclosure. The tire monitoring device 10D includes the acquisition section 11, the detection section 12, the estimation section 13, the prediction section 15, the derivation section 16, the output section 14, and a specifying section 17. Namely, the tire monitoring device 10D has a configuration in which the specifying section 17 is further added to the tire monitoring device 10C (see Fig. 17) according to the above-described third exemplary embodiment.

The specifying section 17 specifies a countermeasure with respect to the cause estimated by the estimation section 13. The specifying section 17 may specify a countermeasure corresponding to the cause estimated by the estimation section 13, for example, by referring to a database in which a cause of an internal pressure change and a countermeasure are associated with each other. The aforementioned database may be stored in the non-volatile memory 103 of the tire monitoring device 10D. The output section 14 outputs, together with the cause information, countermeasure information indicating a countermeasure specified by the specifying section 17.

Processing executed by the CPU reading and executing software (a program) in each of the above-described exemplary embodiments may be executed by any of various types of processors other than a CPU. Examples of such processors include a programmable logic device (PLD) in which the circuit configuration can be modified post-manufacture, such as a field-programmable gate array (FPGA), or a specialized electric circuit that is a processor with a specifically-designed circuit configuration for executing specific processing, such as an application specific integrated circuit (ASIC). Further, the above-described processing may be executed by one of these various types of processors, or may be executed by combining two or more of the same type or different types of processors (for example, plural FPGAs, or a combination of a CPU and an FPGA, or the like). Moreover, a hardware configuration of the various processors is specifically formed as an electric circuit combining circuit elements such as semiconductor elements.

In addition, although explanation has been given regarding an aspect in which a tire monitoring program is stored (installed) in advance in the storage device in each of the above-described exemplary embodiments, there is no limitation thereto. The programs may be provided in a format recorded on a recording medium such as CD-ROM, digital versatile disc read only memory (DVD-ROM), or universal serial bus (USB) memory. Alternatively, the programs may be provided in a format downloadable from an external device via a network.

Contribution to UN-led Sustainable Development Goals (SDGs)

SDGs have been proposed toward the realization of a sustainable society. One exemplary embodiment of the present invention is considered to be technology that contributes to "No. 12 Responsible Consumption and Production" and "No. 13 Climate Action" and the like.

Note that the disclosure of Japanese Patent Application No. 2023-189669, filed November 6, 2023, is hereby incorporated by reference in its entirety. Furthermore, all documents, patent applications, and technical standards described herein are incorporated by reference to the same extent as if the individual documents, patent applications, and technical standards were specifically and individually described as being incorporated by reference.

**Claims**

1. A tire monitoring device, comprising:

   an acquisition section that acquires internal pressure information indicating a transition of an internal pressure of a tire;
   an estimation section that estimates at least one cause of an internal pressure change based on a change pattern, which is a pattern of internal pressure change indicated by the internal pressure information; and
   an output section that outputs cause information indicating the estimated cause.

2. The tire monitoring device according to claim 1, wherein:

   the tire monitoring device further comprises a detection section that detects an abnormal internal pressure change based on the change pattern indicated by the internal pressure information; and
   the estimation section estimates the cause with respect to a tire for which an abnormal internal pressure change is detected.

3. The tire monitoring device according to claim 1, wherein:
   the estimation section estimates the cause based on a rate of change in internal pressure indicated by the internal pressure information.

4. The tire monitoring device according to claim 1, wherein:
   the estimation section estimates the cause by comparing a plurality of reference patterns, which respectively correspond to a plurality of causes of an internal pressure change, with the change pattern.

5. The tire monitoring device according to claim 1, wherein:
   the estimation section estimates the cause based on the change pattern, before and after maintenance, indicated by the internal pressure information.

6. The tire monitoring device according to claim 1, wherein:
   the estimation section estimates the cause using a classification model, which is learned by machine learning, with the change pattern as an input and the cause as an output.

7. The tire monitoring device according to claim 1, wherein:
   the output section outputs the cause information to a predetermined device and/or uploads the cause information to a website.

8. The tire monitoring device according to claim 1, wherein:

   the acquisition section acquires the internal pressure information for each of a plurality of tires provided at each of a plurality of vehicles;
   the estimation section estimates the cause for each vehicle and for each tire installation position; and
   the output section outputs the cause information for each vehicle and for each tire installation position.

9. The tire monitoring device according to claim 2, wherein:

   the acquisition section acquires the internal pressure information for each of a plurality of tires provided at each of a plurality of vehicles; and
   the detection section detects an abnormal internal pressure change by comparing internal pressure information for each of the plurality of tires with each other.

10. The tire monitoring device according to any one of claim 1 to claim 9, wherein:

    the tire monitoring device further comprises a specifying section that specifies a countermeasure with respect to the cause estimated by the estimation section; and
    the output section outputs, together with the cause information, countermeasure information indicating the specified countermeasure.

11. A tire monitoring method in which a computer executes processing, the processing comprising:

    acquiring internal pressure information indicating a transition of an internal pressure of a tire;
    estimating at least one cause of an internal pressure change based on a change pattern, which is a pattern of internal pressure change indicated by the internal pressure information; and
    outputting cause information indicating the estimated cause.

12. A tire monitoring program that causes a computer to execute processing, the processing comprising:

    acquiring internal pressure information indicating a transition of an internal pressure of a tire;

estimating at least one cause of an internal pressure change based on a change pattern, which is a pattern of internal pressure change indicated by the internal pressure information; and
outputting cause information indicating the estimated cause.

[FIG. 1]

[FIG. 2]

EP 4 755 661 A1

[FIG. 3]

[FIG. 4]

[FIG. 5]

[FIG. 6A]

[FIG. 6B]

[FIG. 7]

[FIG. 8]

## VEHICLE ID: Vehicle #01 POSITION ID: Pos 2

| CAUSE | |
|---|---|
| RIM | ✔ |
| VALVE | ✔ |
| O-RING | |
| SIDE CUT | |

[FIG. 9A]

[FIG. 9B]

[FIG. 10]

10A

TIRE MONITORING DEVICE

ACQUISITION SECTION — 11

PREDICTION SECTION — 15

OUTPUT SECTION — 14

[FIG. 11A]

[FIG. 11B]

[FIG. 12]

```
                    ┌─────────────┐
                    │    START    │
                    └──────┬──────┘
                           │
        ┌──────────────────┴──────────────────┐
S11     │   ACQUISITION OF INTERNAL            │
        │   PRESSURE INFORMATION               │
        └──────────────────┬──────────────────┘
                           │
        ┌──────────────────┴──────────────────┐
S12     │   PREDICTION OF THRESHOLD            │
        │   ARRIVAL TIMING                     │
        └──────────────────┬──────────────────┘
                           │
        ┌──────────────────┴──────────────────┐
S13     │   OUTPUT OF TIMING INFORMATION       │
        └──────────────────┬──────────────────┘
                           │
                    ┌──────┴──────┐
                    │     END     │
                    └─────────────┘
```

[FIG. 13]

[FIG. 14]

[FIG. 15]

[FIG. 16]

THRESHOLD ARRIVAL TIMING

VEHICLE ID: Vehicle #04
POSITION ID: Pos 3

ORDER OF PRIORITY
: 4TH PLACE

VEHICLE ID: Vehicle #03
POSITION ID: Pos 4

ORDER OF PRIORITY
: 5TH PLACE

VEHICLE ID: Vehicle #01
POSITION ID: Pos 3

ORDER OF PRIORITY
: 3RD PLACE

ORDER OF PRIORITY
: 2ND PLACE

VEHICLE ID: Vehicle #02
POSITION ID: Pos 1

ORDER OF PRIORITY
: 1ST PLACE

VEHICLE ID: Vehicle #05
POSITION ID: Pos 2

x-axis: '23/10/10, '23/10/17, '23/10/24, '23/10/31, '23/11/7

y-axis: RATE OF CHANGE IN INTERNAL PRESSURE [psi/day]: 0, -1, -2, -3, -4, -5, -6, -7, -8, -9

[FIG. 17]

10C

TIRE MONITORING DEVICE

ACQUISITION SECTION — 11

DETECTION SECTION — 12

ESTIMATION SECTION — 13

PREDICTION SECTION — 15

DERIVATION SECTION — 16

OUTPUT SECTION — 14

[FIG. 18]

```
                          ┌─────────┐
                          │  START  │
                          └────┬────┘
                               │  ←────────────────────┐
        ┌──────────────────────┴──────────────────┐    │
  S21   │   ACQUISITION OF INTERNAL                │    │
        │   PRESSURE INFORMATION                   │    │
        └──────────────────────┬──────────────────┘    │
                               │                        │
                    ╱──────────┴──────────╲             │
  S22      ╱        DETECTION OF ABNORMAL        ╲   N   │
        ╲     INTERNAL PRESSURE CHANGE?        ╱────────┘
                    ╲──────────┬──────────╱
                               │ Y
        ┌──────────────────────┴──────────────────┐
  S23   │   ESTIMATION OF CAUSE OF                 │
        │   INTERNAL PRESSURE CHANGE               │
        └──────────────────────┬──────────────────┘
        ┌──────────────────────┴──────────────────┐
  S24   │   PREDICTION OF THRESHOLD                │
        │   ARRIVAL TIMING                         │
        └──────────────────────┬──────────────────┘
        ┌──────────────────────┴──────────────────┐
  S25   │   DERIVATION OF ORDER OF                 │
        │   PRIORITY OF MAINTENANCE                │
        └──────────────────────┬──────────────────┘
        ┌──────────────────────┴──────────────────┐
  S26   │   OUTPUT OF TIMING INFORMATION           │
        │   AND ORDER OF PRIORITY                  │
        └──────────────────────┬──────────────────┘
                          ┌─────┴─────┐
                          │    END    │
                          └───────────┘
```

[FIG. 19]

THRESHOLD ARRIVAL TIMING

RATE OF CHANGE IN INTERNAL PRESSURE [psi/day]

'23/10/10   '23/10/17   '23/10/24   '23/10/31   '23/11/7

ORDER OF PRIORITY
: 3RD PLACE

ORDER OF PRIORITY
: 5TH PLACE

ORDER OF PRIORITY
: 4TH PLACE

VEHICLE ID: Vehicle #01
POSITION ID: Pos 3

VEHICLE ID: Vehicle #03
POSITION ID: Pos 4

VEHICLE ID: Vehicle #04
POSITION ID: Pos 3

ORDER OF PRIORITY
: 2ND PLACE

VEHICLE ID: Vehicle #02
POSITION ID: Pos 1

| CAUSE | |
|---|---|
| RIM | |
| VALVE | ✔ |
| O-RING | |
| SIDE CUT | |

ORDER OF PRIORITY
: 1ST PLACE

VEHICLE ID: Vehicle #05
POSITION ID: Pos 2

| CAUSE | |
|---|---|
| RIM | |
| VALVE | |
| O-RING | |
| SIDE CUT | ✔ |

EP 4 755 661 A1

32

[FIG. 20]

10D

**TIRE MONITORING DEVICE**

ACQUISITION SECTION — 11

DETECTION SECTION — 12

ESTIMATION SECTION — 13

PREDICTION SECTION — 15

DERIVATION SECTION — 16

OUTPUT SECTION — 14

SPECIFYING SECTION — 17

## INTERNATIONAL SEARCH REPORT

| International application No. |
|---|
| **PCT/JP2024/027214** |

**A. CLASSIFICATION OF SUBJECT MATTER**

***B60C 23/04***(2006.01)i
FI:   B60C23/04 160Z; B60C23/04 220Z

According to International Patent Classification (IPC) or to both national classification and IPC

**B. FIELDS SEARCHED**

Minimum documentation searched (classification system followed by classification symbols)

   B60C23/04

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-092701 A (PANASONIC INTELLECTUAL PROPERTY MANAGEMENT CO., LTD.) 04 July 2023 (2023-07-04)<br>paragraphs [0057], [0066], [0086], [0098], [0132] | 1-4, 6-8, 11-12 |
| Y | paragraphs [0057], [0066], [0086], [0098], [0132] | 9-10 |
| A | | 5 |
| X | JP 2007-137212 A (BRIDGESTONE CORPORATION) 07 June 2007 (2007-06-07)<br>paragraphs [0019], [0039]-[0045], fig. 16-18 | 1-2, 4, 6-8, 11-12 |
| Y | paragraphs [0019], [0039]-[0045], fig. 16-18 | 9-10 |
| A | | 3, 5 |
| Y | WO 2022/039137 A1 (THE YOKOHAMA RUBBER CO., LTD.) 24 February 2022 (2022-02-24)<br>paragraph [0036] | 9 |
| Y | JP 2014-76748 A (BRIDGESTONE CORPORATION) 01 May 2014 (2014-05-01)<br>paragraphs [0007]-[0009] | 9-10 |

☑ Further documents are listed in the continuation of Box C.   ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/027214** |

| C. | DOCUMENTS CONSIDERED TO BE RELEVANT | |
|---|---|---|
| Category* | Citation of document, with indication, where appropriate, of the relevant passages | Relevant to claim No. |
| Y | WO 2023/189444 A1 (BRIDGESTONE CORPORATION) 05 October 2023 (2023-10-05) paragraphs [0043], [0044], [0056], [0086] | 10 |
| A | WO 2022/155009 A1 (BRIDGESTONE CORPORATION) 21 July 2022 (2022-07-21) | 1-12 |

Form PCT/ISA/210 (second sheet) (July 2022)

**INTERNATIONAL SEARCH REPORT**
**Information on patent family members**

International application No.

**PCT/JP2024/027214**

| Patent document cited in search report | | | Publication date (day/month/year) | Patent family member(s) | | | Publication date (day/month/year) |
|---|---|---|---|---|---|---|---|
| JP | 2023-092701 | A | 04 July 2023 | (Family: none) | | | |
| JP | 2007-137212 | A | 07 June 2007 | (Family: none) | | | |
| WO | 2022/039137 | A1 | 24 February 2022 | US paragraph [0043] CN | 2023/0351824 116137845 | A1 A | |
| JP | 2014-76748 | A | 01 May 2014 | US paragraph [0024] WO CN | 2015/0239307 2014/057609 104703821 | A1 A1 A | |
| WO | 2023/189444 | A1 | 05 October 2023 | JP | 2023-151522 | A | |
| WO | 2022/155009 | A1 | 21 July 2022 | JP US CN | 2024-504293 2024/0142332 116685478 | A A1 A | |

Form PCT/ISA/210 (patent family annex) (July 2022)

**REFERENCES CITED IN THE DESCRIPTION**

**Patent documents cited in the description**

- JP 2014076748 A
- JP 2023189669 A